# EUROPÄISCHE PATENTSCHRIFT

(11) **EP 2 262 607 B1**
(45) Veröffentlichungstag und Bekanntmachung des Hinweises auf die Patenterteilung: **17.01.2018**
(21) Anmeldenummer: 09717507.9
(22) Anmeldetag: 04.03.2009
(51) Int. Cl.: B23K 26/08

(54) **EINRICHTUNG UND VERFAHREN ZUR LASERBEARBEITUNG**
DEVICE AND METHOD FOR LASER MACHINING
DISPOSITIF ET PROCÉDÉ D'USINAGE LASER

(30) Priorität: 05.03.2008 DE 202008003143 U
(43) Veröffentlichungstag der Anmeldung: 22.12.2010
(73) Patentinhaber: KUKA Systems GmbH, 86165 Augsburg (DE)
(72) Erfinder: ROTHENFUSSER, Marcus, 86316 Friedberg (DE)
(74) Vertreter: Ernicke, Klaus Stefan
(86) Internationale Anmeldenummer: PCT/EP2009/001538
(87) Internationale Veröffentlichungsnummer: WO 2009/109376

(56) Entgegenhaltungen:
- EP-A- 1 329 280
- DE-B3-102004 011 769
- US-A- 5 231 264
- US-A1- 2004 256 366
- US-A1- 2005 067 392

## Beschreibung

Die Erfindung betrifft eine Laserbearbeitungseinrichtung und ein Verfahren mit den Merkmalen im Oberbegriff des Verfahrens- und Vorrichtungshauptanspruchs.

Eine solche Laserbearbeitungseinrichtung und ein solches Verfahren sind aus der DE 10 2005 039 582 A1 bekannt.

Die EP 1 329 280 A1 zeigt eine ähnliche Bearbeitungseinrichtung mit einem stationären Schweißbrenner oder Laserstrahlwerkzeug an einem ortsfesten Ständer und einem Handlingroboter zur Werkstückführung.

Aus der Praxis sind Laserbearbeitungseinrichtungen bekannt, bei denen ein mehrachsiger Gelenkarmroboter einen Remote-Laserkopf relativ zu einem still stehenden und stationär aufgespannten Werkstück bewegt. Die Auslenkung des vom Laserkopf emittierten Laserstrahls kann durch eine integrierte Scanneroptik mit beweglichen Spiegeln oder durch Bewegungen der üblicherweisen mehrachsigen Roboterhand erfolgen. Mit dem leistungsstarken Laserstrahl können Werkstücke bearbeitet und insbesondere geschweißt, gelötet oder geschnitten werden. Bei diesen Bearbeitungsprozessen sind häufig hohe Genauigkeiten in der Laserstrahlführung erforderlich. Außerdem besteht bei Laserbearbeitungseinrichtungen ein Sicherheitsproblem mit dem räumlich bewegbaren Laserstrahl. Dies zwingt zum Bau von abgeschotteten Laserkabinen mit einer Sicherheitstechnik in den Kabinenwänden, die bei Auftreffen eines Laserstrahls anspricht und die Laserquelle oder die ganze Laserbearbeitungseinrichtung abschaltet. Durch den auftreffenden Laserstrahl werden die Kabinenwände allerdings beschädigt und durchlöchert, was eine aufwändige Reparatur und eine entsprechende Stillstandszeit der Laserbearbeitungseinrichtung erfordert.

Es ist Aufgabe der vorliegenden Erfindung, eine verbesserte Laserbearbeitungstechnik aufzuzeigen.

Die Erfindung löst diese Aufgabe mit den Merkmalen im Verfahrens- und Vorrichtungshauptanspruch.
Die beanspruchte Laserbearbeitungseinrichtung und das zugehörige Laserbearbeitungsverfahren haben den Vorteil, dass eine höhere Genauigkeit in der Strahlführung erreicht werden kann. Insbesondere kann die Zahl der Bewegungsachsen für den Laserkopf reduziert werden, was zu einer höheren Genauigkeit führt. Eine Bewegungsachse in Laserstrahlrichtung kann durch eine verstellbare Brennweite des Laserkopf und eine entsprechende Verstelleinrichtung ersetzt oder ergänzt werden.
Die Laserbearbeitungseinrichtung erfordert einen verringerten Bauaufwand. Die Trageinrichtung wird als starres und stationäres Gestell in Auslegerform ausgebildet. Die mit dem Laserkopf verbundene Bewegungseinheit kann in ihrer Kinematik auf ein bis drei Bewegungsachsen reduziert werden. Insbesondere ist es in aufwands- und steuerungsgünstiger Weise möglich, eine mehrachsige Manipulator- oder Roboterhand als Bewegungseinheit einzusetzen und an der Trageinrichtung anzuordnen. Eine hängende Anordnung der Bewegungseinheit mit einer Laserstrahlausrichtung nach unten hat dabei besondere kinematische, fertigungstechnische und sicherheitstechnische Vorteile.
Für die Sicherheitstechnik ist es günstig, die Beweglichkeit der Bewegungseinheit und des Laserstrahls innerhalb ihrer potenziellen Bewegungsmöglichkeiten zu begrenzen, sodass dieser einen kegel- oder streifenförmigen Arbeitsbereich hat. Unter Sicherheitsgesichtspunkten ist es vorteilhaft, die Beweglichkeit mechanisch durch Anschläge oder dgl. zu begrenzen.

Insbesondere ist es günstig, den Arbeitsbereich des Laserstrahls allseitig zu begrenzen und an der Auftreffseite einen strahlsicheren Bereich, z.B. einen Boden oder eine Wand aus Beton oder anderen widerstandsfähigen Materialien, als Begrenzung zu verwenden. Durch diese Sicherheitstechnik, die an der Laserbearbeitungseinrichtung ansetzt, kann auf zusätzliche Sicherungsmaßnahmen im Umgebungsbereich, z.B. auf eine Laserkabine mit Sicherheitseinrichtungen an den Kabinenwänden verzichtet werden. Die beanspruchte Laserbearbeitungstechnik hat dadurch eine höhere Betriebssicherheit und Verfügbarkeit. Fehler in der Laserstrahlführung können besser und mit höherer Sicherheit als bisher vermieden werden. Günstig für die Reichweite und für die Erreichbarkeit der Bearbeitungsstellen am Werkstück ist auch der Einsatz eines Remote-Laserkopfs mit längerer Brennweite. Die sicherheitsrelevante Ausbildung der Laserbearbeitungseinrichtung hat eigenständige erfinderische Bedeutung und lässt sich auch bei anderen konstruktiven Ausgestaltungen der Trageinrichtung und des Laserkopfes, insbesondere bei einem Einsatz von mehrachsigen Gelenkarmrobotern, mit Vorteil verwenden.
Bei einer innerhalb ihrer potenziellen Bewegungsmöglichkeiten begrenzten Kinematik der Trageinrichtung und der Bewegungseinheit für den Laserkopf ist es günstig, eine bewegliche Handhabungseinrichtung für ein oder mehrere Werkstücke einzusetzen, die für zusätzliche Bewegungsfreiheiten sorgt. Die Handhabungseinrichtung und die Bewegungseinheit für den Laserkopf werden gemeinsam gesteuert, z.B. durch eine Roboter- oder Stationssteuerung. Die Werkstücke können unter dem Laserstrahl in einer abgestimmten Bewegung schwebend gehalten und bewegt werden.

Die Handhabungseinrichtung kann insbesondere ein oder mehrere Roboter besitzen, die einzeln arbeiten können oder in aufeinander abgestimmten Bewegungen kooperieren. Sie können geeignete Handhabungswerkzeuge tragen, die ggf. mehrteilig ausgebildet sind. Sie können nicht nur der Handhabung, sondern auch der Positionierung und Geometriebildung der aufgenommenen Werkstücke dienen.

In einer besonders günstigen Ausführungsform können die Handhabungsgeräte nicht nur in ihren Bewegungen, sondern auch in ihren Werkzeugfunktionen kooperieren und mit ihren Werkzeugteilen ein gemeinsames kastenartiges Handhabungswerkzeug bilden, das nach Bedarf geöffnet und geschlossen werden kann. Dies ermöglicht eine bessere Handhabung und Führung des oder der Werkstücke, die auch mehrteilig sein können und bietet eine höhere Prozessvielfalt. Insbesondere können Einzelbearbeitungen an Werkstückteilen vor dem Zusammenfügen der Werkstückteile und der Werkzeugteile geschehen. Das teilbare Handhabungswerkzeug ermöglicht in Öffnungsstellung ein Assembling der Werkstücke oder Werkstückteile an ein oder mehreren seiner Werkzeugteile vor dem Fügeprozess. Es kann außerdem nach Lösen von der Handhabungseinrichtung in geschlossener oder offener Stellung zum Transport von Werkstücken benutzt werden, die hierzu über steuerbare Greifelemente mit dem Handhabungswerkzeug oder dessen zwei oder mehr Werkzeugteilen in Spannstellung verbunden bleiben. Es kann auch spezielle Greifelemente geben, die das assemblierte oder gefügte Werkstück spannen und halten. Werkzeugelemente in Doppelfunktion und mit Einwirkung auf die am jeweils anderen Greiferteil gehaltenen Werkstücke sorgen für eine besonders gute und störungsarme Werkstückaufnahme im Handhabungswerkzeug.

Diese Ausbildung der Handhabungseinrichtung hat ebenfalls eigenständige erfinderische Bedeutung und lässt sich auch mit anderen Laserbearbeitungseinrichtungen oder anderen Bearbeitungsvorrichtungen und auch anderen Fügeprozessen ohne Laserstrahl, z.B. Punktschweißen, in beliebiger Art mit Vorteil verwenden.

Die beanspruchte Laserbearbeitungstechnik ermöglicht ferner besonders vorteilhafte Ausgestaltungen von Bearbeitungsstationen und Bearbeitungsanlagen. In einer Bearbeitungsstation können mehrere Bearbeitungsvorgänge mit hoher Präzision und großer Sicherheit stattfinden. Die beanspruchte Laserbearbeitungstechnik hat ferner Vorteile für die Wirtschaftlichkeit. Insbesondere kann die Lasertechnik besser und umfassender ausgenutzt werden. Durch eine Mehrfachanordnung von Handhabungseinrichtungen können Bearbeitungs- und Rüstzeiten optimiert werden. Die Wertschöpfung wird wesentlich erhöht. Andererseits können der Bauaufwand und die Kosten niedrig gehalten und die Wirtschaftlichkeit erhöht werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Draufsicht auf eine Bearbeitungsstation mit einer Laserbearbeitungseinrichtung,
- Figur 2 und 3:: Seitenansichten der Bearbeitungsstation gemäß Pfeilen II und III von Figur 1,
- Figur 4:: eine vergrößerte Draufsicht auf eine Laserbearbeitungseinrichtung,
- Figur 5 und 6:: Seitenansichten der Laserbearbeitungseinrichtung gemäß Pfeilen V und VI von Figur 4,
- Figur 7:: eine vergrößerte Ansicht einer Bewegungseinheit mit einem Laserkopf,
- Figur 8:: eine schematische Darstellung der Sicherheitstechnik der Laserbearbeitungseinrichtung,
- Figur 9:: ein aus zwei Werkzeugteilen bestehendes Handhabungswerkzeug in offener Stellung und in perspektivischer Ansicht,
- Figur 10:: die Werkzeugteile von Figur 9 mit aufgenommenen Werkstückteilen,
- Figur 11:: eine Werkzeugteil mit Werkstückteil in Draufsicht,
- Figur 12:: eine perspektivische Ansicht des geschlossenen Handhabungswerkzeugs ohne Werkstück,
- Figur 13 bis 17:: eine Variante des Handhabungswerkzeugs und der Werkstückteile in verschiedenen Ansichten.

Die Erfindung betrifft eine Laserbearbeitungseinrichtung (1) und ein Laserbearbeitungsverfahren. Sie betrifft ferner eine mit mindestens einer solchen Laserbearbeitungseinrichtung (1) ausgerüstete Bearbeitungsstation (2) und auch eine Bearbeitungsanlage (3), die ein oder mehrere dieser Bearbeitungsstationen (2) umfassen kann.

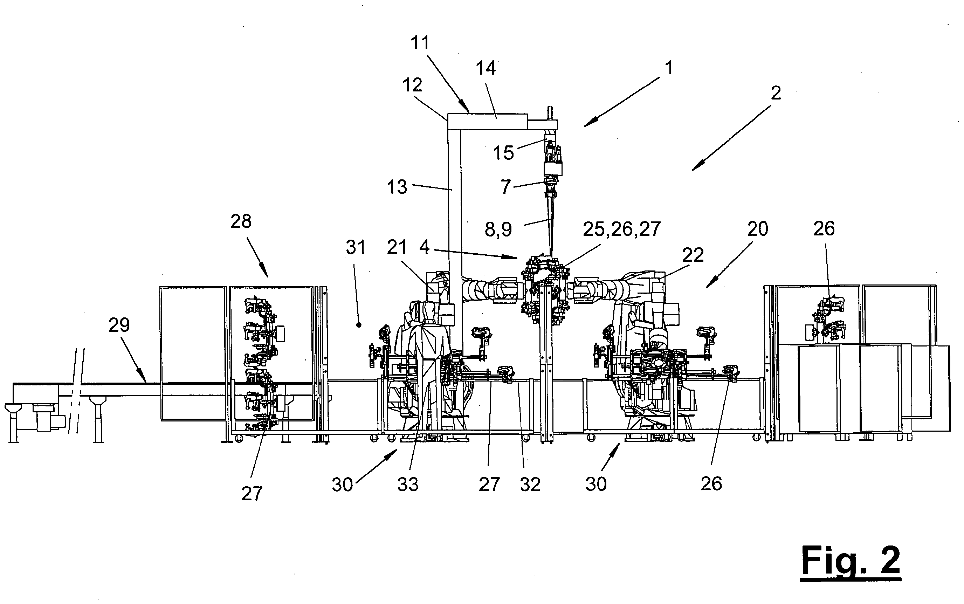

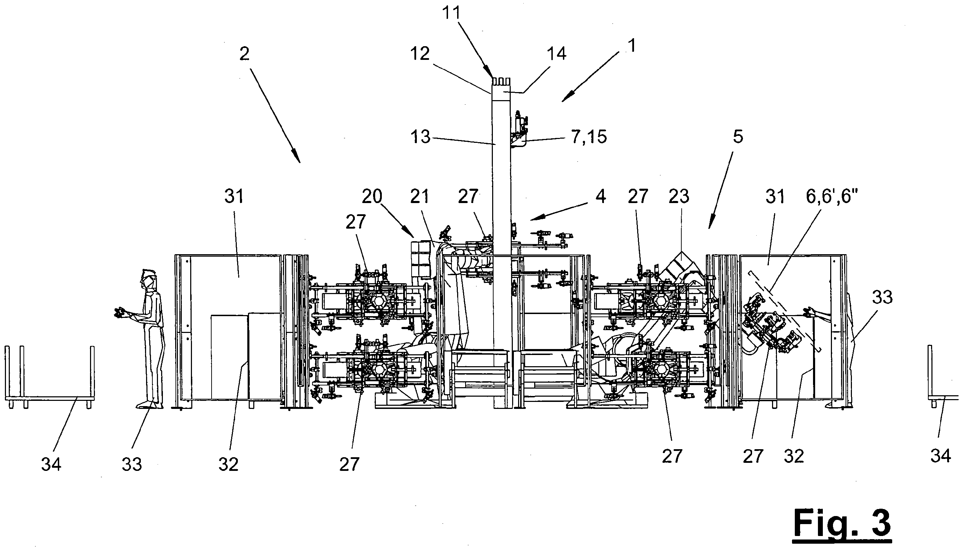

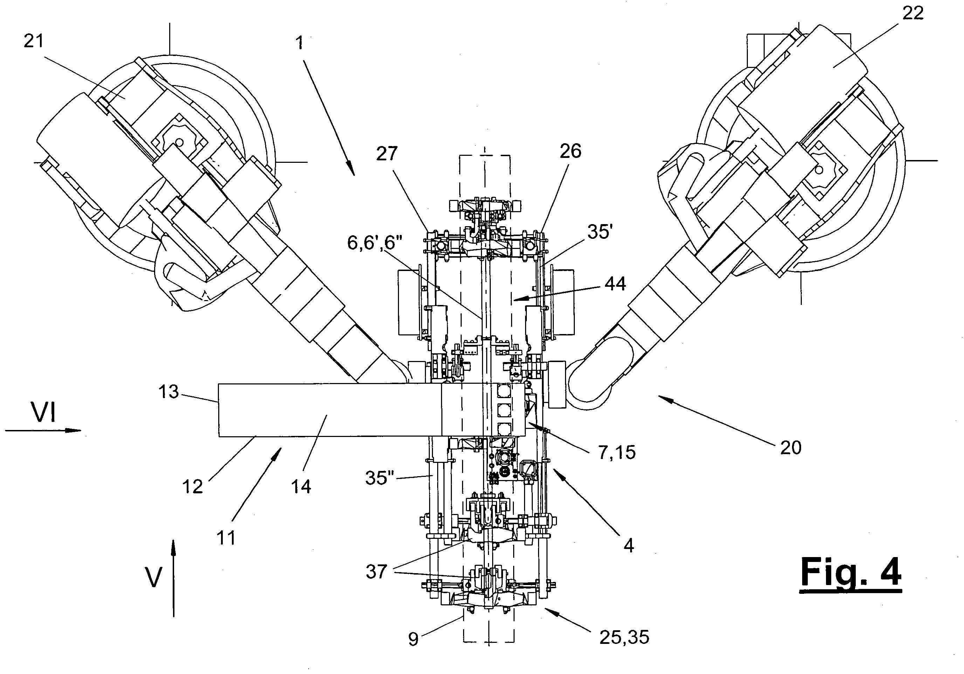

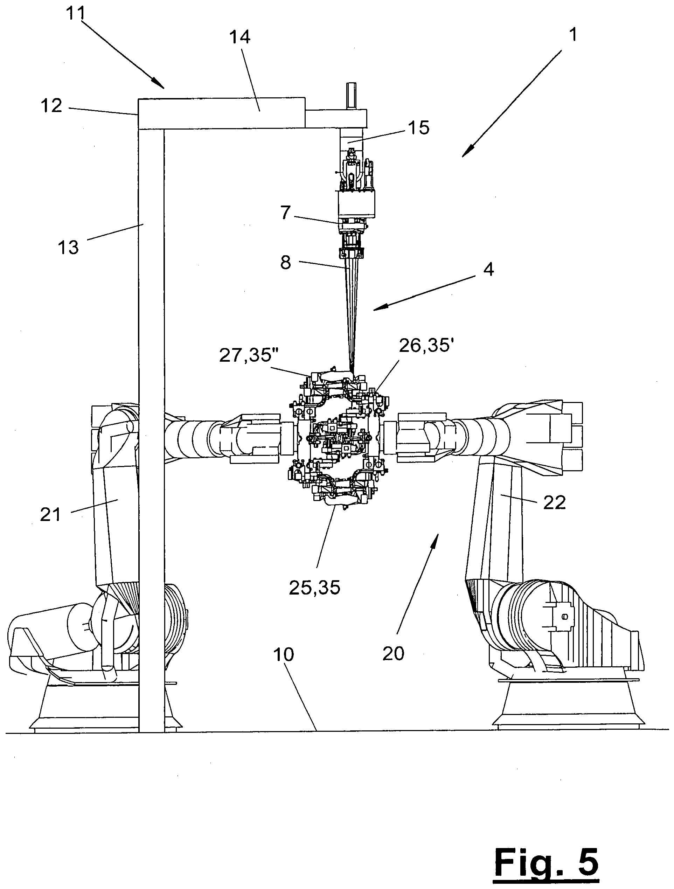

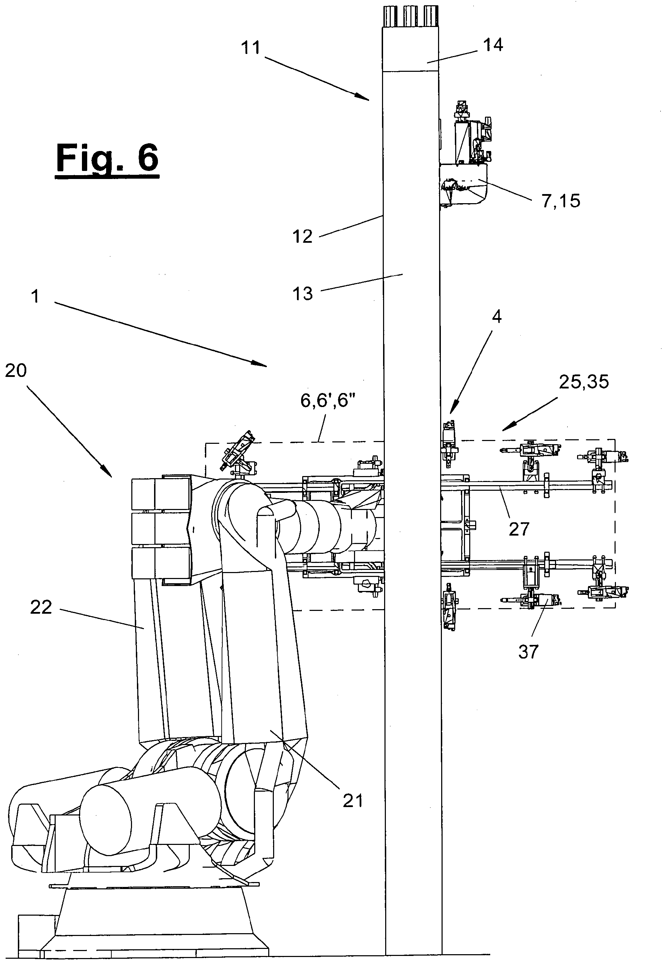

Figur (1) zeigt in einer schematischen Draufsicht eine Bearbeitungsanlage (3) mit mindestens einer Bearbeitungsstation (2) und mindestens einer Laserbearbeitungseinrichtung (1). In Figur 2 und 3 sind die zugehörigen Seitenansichten dargestellt. Figur 4 bis 6 zeigen die Anordnung in einer vergrößerten Darstellung.

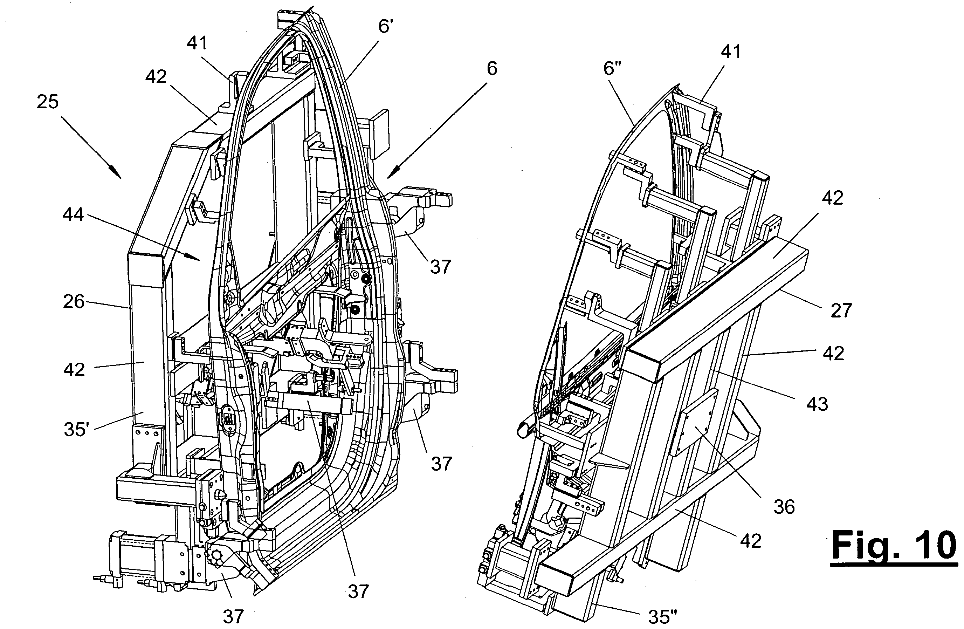

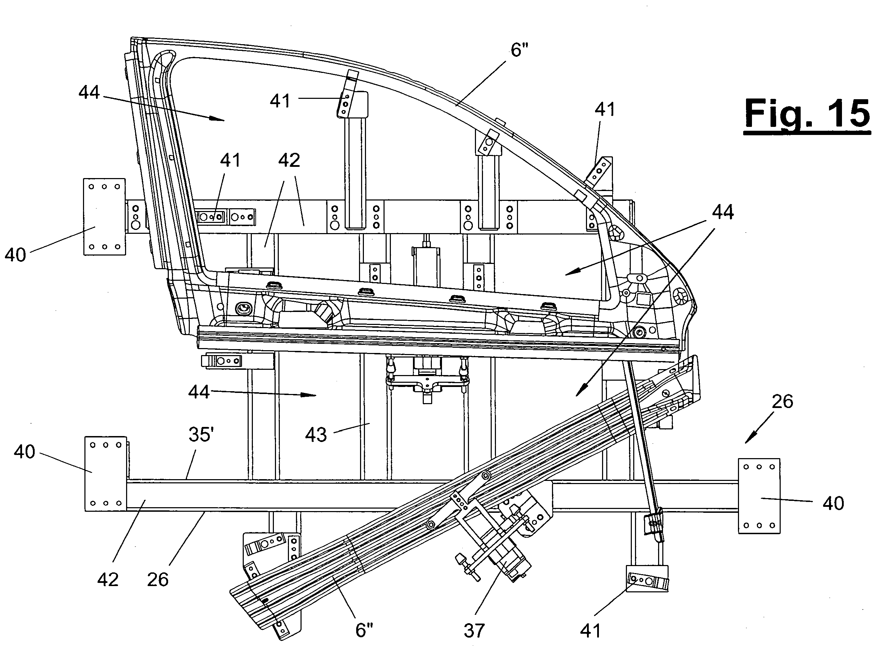

Die Laserbearbeitungseinrichtung (1) dient zur Bearbeitung von ein oder mehreren Werkstücken (6). In den Zeichnungen ist der Übersicht halber in Figur 4 ein Werkstück (6) schematisch dargestellt. Figur 10,11 und 13 bis 16 zeigen ebenfalls Werkstücke (6). Die Werkstücke (6) können aus ein oder mehreren Teilen bestehen. Sie können von beliebiger Art und Größe sein. Beispielsweise handelt es sich um Karosseriebauteile, z.B. Türen, Klappen oder dgl. aus Metall oder anderen geeigneten Werkstoffen.

In der Laserbearbeitungseinrichtung (1) können unterschiedliche Arten von Bearbeitungsprozessen mit ein oder mehreren Laserstrahlen (8) durchgeführt werden. Die Laserstrahlen haben eine erhöhte Leistung oder Energie von z.B. 2 kW oder mehr. Die Bearbeitungsprozesse können Fügeprozesse sein, z.B. ein Schweißen, Löten, Kleben oder dgl. mittels Laserstrahl. Ein anderer Bearbeitungsprozess kann ein Trennen oder Schneiden mittels Laserstrahl sein. Mit dem Laserstrahl (8) können außerdem Zusatzprozesse oder vorbereitende Prozesse ausgeführt werden, z.B. ein Bilden von Buckeln in einem Werkstück (6) oder Werkstückteil (6',6"). Derartige kleine Buckel können als Distanzbildner an der Fügestelle fungieren und z.B. einen Entgasungsspalt für Korrosionsschutzschichten der Werkstücke (6) oder Werkstückteile (6',6") schaffen.

Die Laserbearbeitungseinrichtung (1) weist eine Trageinrichtung (11) für mindestens einen Laserkopf (7) auf, der mindestens einen energiereichen Laserstrahl (8) zur Arbeitsstelle (4) emittiert. Der Laserstrahl (8) wird mittels einer Laserquelle (nicht dargestellt) erzeugt, die an beliebiger Stelle angeordnet sein kann und die bei einer entfernten Anordnung mit dem Laserkopf (7) über mindestens eine Leitung (nicht dargestellt), z.B. ein flexibles Lichtleitfaserkabel, verbunden ist. Die Laserbearbeitungseinrichtung (1) kann ferner eine Handhabungseinrichtung (20) für die Werkstücke (6) aufweisen.

Der Laserkopf (7) und die Laserquelle können in beliebiger Weise ausgebildet sein. Die Laserquelle kann einen oder mehrere konstante oder gepulste Laserstrahlen (8) mit hoher Strahlqualität und der für Füge- und Trennprozesse erforderlichen Leistung emittieren, wobei sie z.B. als Scheibenlaser, Faserlaser, Diodenlaser oder dgl. ausgebildet ist. Die Laserquelle kann mehrere Laserköpfe (7) versorgen und mit einer Strahlweiche zur Umschaltung gekoppelt sein. Sie kann in der Leistung steuerbar und schaltbar sein. Der Laserkopf (7) kann einen Strahlteiler zur Aufspaltung des zugeführten Laserstrahls (8) besitzen.

Die Trageinrichtung (11) besitzt ein Gestell (12), an dem eine Bewegungseinheit (15) angeordnet ist, die ein oder mehrere Bewegungsachsen I, II, III besitzt und die den Laserkopf (7) trägt und bewegt. Der Laserkopf (7) ist als Remote-Laser ausgebildet und wird von der Trageinrichtung (11) mit Abstand und ohne Berührungskontakt zum Werkstück (6) gehalten.

Der Laserkopf (7) kann eine längere Brennweite und einen entsprechend großen Arbeitsabstand haben. Die Brennweite ist bevorzugt größer als 0,5 m, insbesondere größer als 1 m. Sie kann z.B. in den gezeigten Ausführungsformen ca. 1,5 m betragen. Derartige Brennweiten sind günstig, wenn der Laserstrahl (8) durch Winkelbewegungen abgelenkt und dabei relativ zum Werkstück (6) bewegt wird, was z.B. durch rotatorische Achsbewegungen der Bewegungseinheit (15) und/oder durch eine Scanneroptik des Laserkopfs (7) geschehen kann. Bei einer größeren Länge von Brennweite bzw. Arbeitsabstand bewirken kleine Winkelbewegungen große und schnelle Bewegungen des Strahlauftreffpunkts und des Fokus am Werkstück (6). Dies ist für den Bearbeitungsprozess und die Taktzeit günstig. Andererseits ist es sinnvoll, die besagte Länge nach oben zu begrenzen, z.B. auf ca. 2 m, um Bauhöhe oder Bauraum zu sparen. Die Wahl der Länge von Brennweite bzw. Arbeitsabstand kann nach diesen Kriterien optimiert werden.

Der Laserkopf (7) kann eine feste Brennweite haben. Alternativ kann er eine verstellbare Brennweite besitzen und eine fernsteuerbare Verstelleinrichtung haben. Im Laserkopf (7) ist z.B. eine Optik (nicht dargestellt) angeordnet, wobei zur Brennweitenverstellung z.B. deren Linsengruppen und/oder Spiegelgruppen relativ zueinander verstellt werden. Alternativ oder zusätzlich sind eine Verstellung des Fasereinkoppelpunktes und ggf. der Einsatz von beweglichen Streulinsen möglich. Daneben sind weitere konstruktive Varianten der Verstelleinrichtung und der internen Ausbildung des Laserkopfes (7) möglich.

Das Gestell (12) ist in der gezeigten Ausführungsform starr ausgebildet und stationär angeordnet. Es weist eine aufrechte Säule (13) und mindestens einen quer abstehenden Ausleger (14) auf. An dessen Ende kann die Bewegungseinheit (15) angeordnet sein. In der gezeigten Ausführungsform sind die Bewegungseinheit (15) und der Laserkopf (7) hängend angeordnet, wobei der Laserstrahl (8) nach unten zur Arbeitsstelle (4) und gegen den Stationsboden emittiert wird. Das abgewinkelte Gestell (12) hat in diesem Ausführungsbeispiel eine Galgenform. Es kann alternativ als Portal oder in anderer geeigneter Weise ausgebildet sein. In weiterer Abwandlung kann der Laserkopf (7) schräg oder horizontal gehalten werden, wobei das Gestell (12) eine entsprechend geänderte konstruktive Ausbildung und Anordnung hat.

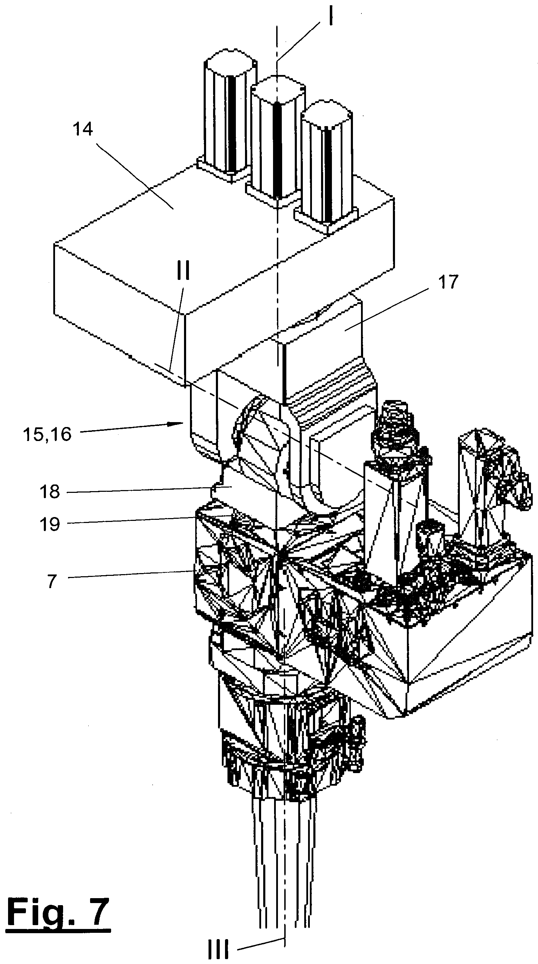

Die Bewegungseinheit (15) ist in Figur 7 beispielsweise dargestellt. Sie ist in der bevorzugten Ausführungsform als mehrachsige Manipulatorhand (16) oder Roboterhand ausgebildet. In der gezeigten Ausführungsform hat sie drei orthogonale, rotatorische Bewegungsachsen I, II und III. Die Manipulatorhand (16) besitzt z.B. ein Gehäuse (17), welches um eine erste z.B. vertikale Bewegungsachse I drehbar an der Unterseite des Auslegers (14) angeordnet ist. Das Gehäuse (17) kann sich z.B. um einen Winkel von bis zu 360° oder mehr drehen. Das Gehäuse (17) kann am vorderen Ende gabelförmig ausgebildet sein und einen Schwenkkopf (18) tragen, der um eine orthogonale und z.B. horizontale Bewegungsachse II schwenkbar im Gehäuse (17) gelagert ist. Der Schwenkkopf (18) kann am freien Ende einen Abtriebsflansch (19) aufweisen, der um eine wiederum orthogonale Bewegungsachse III drehbar gelagert ist. Am Abtriebsflansch (19) kann der Laserkopf (7) in geeigneter Weise lösbar befestigt sein. Die Bewegungsachsen I, II, III können eigenständig angetrieben und gesteuert sein. Figur 7 zeigt z.B. die Anordnung von drei Antriebsmotoren auf der Oberseite des Auslegers (14).

In Abwandlung der gezeigten dreiachsigen Ausführungsform kann die Manipulatorhand (16) eine andere Achsenzahl, z.B. nur zwei rotatorische Bewegungsachsen II, III aufweisen, wobei das Gehäuse (17) starr am Ausleger (14) angeordnet ist. Ferner kann die Bewegungseinheit (15) konstruktiv anders ausgebildet sein und translatorische Achsen oder eine Kombination von translatorischen und rotatorischen Achsen aufweisen.

Die Bewegungseinheit (15) besitzt eine begrenzte Beweglichkeit oder Kinematik, wobei die Begrenzung vorzugsweise mechanisch ausgebildet ist. Die Begrenzung liegt innerhalb der Grenzen der Achsbeweglichkeit und des potenziell möglichen Bewegungsbereichs und schränkt den tatsächlich vorhandenen Arbeitsbereich ein. Die Bewegungseinheit (15) schöpft durch die Begrenzung ihre durch die ein oder mehreren Bewegungsachsen an sich vorhandenen Bewegungsmöglichkeiten nicht aus. In der gezeigten Ausführungsform wird z.B. die Schwenkbewegung des Schwenkkopfes (18) um die Achse II mechanisch durch Anschläge oder dgl. begrenzt. Die anderen Drehachsen I und III können ohne Begrenzung sein. Alternativ können sie ebenfalls eine vorzugsweise mechanische Begrenzung haben.

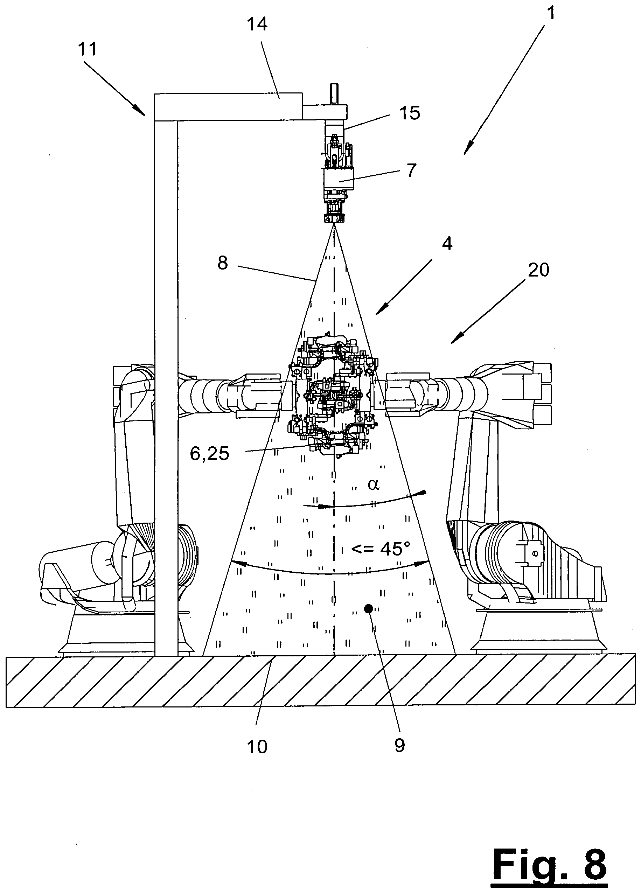

Wie Figur 8 verdeutlicht, erhält der Laserstrahl (8) durch die begrenzte Beweglichkeit der Bewegungseinheit (15) einen begrenzten Arbeitsbereich (9), der z.B. eine räumliche Kegelform hat. Er kann alternativ eine ebenfalls konische Streifenform haben, wie sie in Figur 4 angedeutet ist. Die Begrenzung des Arbeitsbereichs (9) kann auf die Geometrie des oder der Werkstücke (6) und/oder auf die Lage der Bearbeitungsstellen abgestimmt sein, wobei ggf. deren durch die Handhabungseinrichtung (20) veränderliche Raumlage berücksichtigt wird. Durch eine solche Begrenzung lässt sich erreichen, dass die Handhabungseinrichtung (20) und ggf. andere Teile der Laserbearbeitungseinrichtung (1) aus dem Arbeitsbereich (9) weitgehend frei gehalten werden können.

Die Laserbearbeitungseinrichtung (1) ist gemäß eines eigenen Erfindungsaspekts derart ausgebildet, angeordnet und zur Arbeitsstelle (4) ausgerichtet, dass der Arbeitsbereich (9) des Laserstrahls (8) allseitig begrenzt und definiert ist. Die seitliche Begrenzung wird durch eine Begrenzung der Auslenkung des Laserstrahls (8) geschaffen. Dies kann zum einen in der vorher erwähnten Weise durch die begrenzte Kinematik der Bewegungseinheit (15) erfolgen. Alternativ kann der Laserkopf (7) starr am Gestell (11) angeordnet sein oder eine Bewegungseinheit (15) mit einer kleineren Achsenzahl besitzen, wobei die Auslenkung des emittierten Laserstrahls (8) durch eine um ein oder mehrere Achsen bewegliche Scanneroptik erreicht wird. In diesem Fall können die Scannerspiegel in ihrer Auslenkung vorzugsweise mechanisch begrenzt werden, was wiederum zu einer begrenzten Auslenkung des Laserstrahls (8) führt. In Abwandlung der Ausführungsbeispiele können die Begrenzungen in der Auslenkung des Laserstrahls (8) über die Bewegungseinheit (15) und/oder über eine Scanneroptik statt durch mechanische Mittel, z.B. Anschläge oder dgl., auf andere Weise erreicht werden, z.B. durch steuertechnische Beschränkungen in der Achskinematik.

An der Auftreffseite jenseits der Arbeitsstelle (4) ist der Arbeitsbereich (9) durch einen strahlsicheren Bereich (10) in der Umgebung begrenzt. Der Laserstrahl (8) kann sich nicht über diesen strahlsicheren Bereich (10) hinaus bewegen. In der gezeigten Ausführungsform ist der Arbeitsbereich (9) des Laserstrahls (8) nach unten gegen den Boden gerichtet.

Der strahlsichere Bereich (10) kann den auftreffenden Laserstrahl (8) aufnehmen und die eingebrachte Strahlenergie ohne Gefahr für die Laserbearbeitungseinrichtung (1) und für die Umgebung absorbieren. Der strahlsichere Bereich (10) ist z.B. als ein massiver Boden oder als eine massive Wand ausgebildet und besteht aus einem entsprechend geeigneten absorptionsfähigen Material, z.B. aus Beton, Stein oder dgl.. Der strahlsichere Bereich (10) hat außerdem eine absorptionsgerechte Dicke und kann vom Laserstrahl (8) nicht durchdrungen und nicht zerstört werden.

Vorteilhafterweise werden auch das Werkstück (6) und seine mit dem Laserstrahl (8) bearbeiteten Zonen im mittleren Teil des Arbeitsbereichs (9) und mit Abstand in Strahlrichtung vom strahlsicheren Bereich (10) positioniert bzw. gehalten. Bis zum Auftreffen am strahlsicheren Bereich (10) weitet sich der Laserstrahl (8) in der vorerwähnten Weise auf, wodurch die Energiedichte an der Auftreffstelle deutlich verringert wird. Die Strahlenergie kann leichter absorbiert werden und die Belastung des Boden- oder Wandmaterials wird gemindert.

In der gezeigten Ausführungsform ist gemäß Figur 8 der räumliche Winkel des Arbeitsbereichs (9) auf einen Wert von z.B. bis zu 45° (räumlicher Kegelwinkel) begrenzt. Das oder die zu bearbeitenden Werkstücke (6) können stationär im Arbeitsbereich (9) positioniert werden, z.B. mittels einer Aufnahme mit einer Spanneinrichtung. Alternativ kann wie in den gezeigten Ausführungsbeispielen eine bewegliche Handhabungseinrichtung (20) vorhanden sein, die das oder die Werkstücke (6) im Arbeitsbereich (9) hält und mit einer Kinematik von mehreren Achsen bewegt. Beispielsweise sind die Werkstücke (6) frei im Raum beweglich und können um die sechs translatorischen und rotatorischen Achsen oder Freiheitsgrade bewegt werden.

Je nach Größe und Beweglichkeit des oder der Werkstücke (6) kann der Arbeitsbereich (9) verkleinert werden. In der gezeigten Ausführungsform gemäß Figur 8 wird z.B. der Auslenkwinkel α der Schwenkachse II der Bewegungseinheit (15) gegenüber der Nulllage begrenzt, die z.B. durch die vertikale Strahl- und Laserkopfausrichtung definiert ist. Der begrenzte Auslenkwinkel α kann z.B. bis zu ± 10 ° betragen, was bei einer beidseits symmetrischen Auslenkung zu einem Winkel des Arbeitsbereichs (9) von bis zu 20° führt. Der Auslenkwinkel α kann bei Bedarf, z.B. aus den erwähnten Sicherheitsgründen, auf noch kleinere Werte begrenzt werden. Bevorzugt ist eine Winkelgröße von bis zu ± 5° des Auslenkwinkels α und ein Gesamtwinkel für den Arbeitsbereich (9) von bis zu 10°. Die mechanischen Begrenzungen für den Arbeitsbereich (9) können verstellbar sein und eine Anpassung an unterschiedliche Werkstücke (6) und Bearbeitungsbedingungen ermöglichen.

Die Handhabungseinrichtung (20) weist im Umfeld der Arbeitsstelle (4) ein oder mehrere Handhabungsgeräte (21,22,23,24) mit einer oder mehreren steuerbaren sowie mit Antrieben versehenen Bewegungsachsen und mit einem Handhabungswerkzeug (25) auf. Die Handhabungsgeräte (21,22,23,24) können in beliebiger Weise ausgebildet sein. In den gezeigten Ausführungsbeispielen handelt es sich um mehrachsige Roboter, insbesondere um Gelenkarmroboter mit sechs rotatorischen Achsen, die sich in drei Armachsen und drei Achsen der Roboterhand gliedern. Die Handhabungsgeräte (21,22,23,24) stehen im gezeigten Ausführungsbeispiel auf dem Boden oder einem Podest. Alternativ können sie sich auf einem Portal befinden oder auch an einer Wand befestigt sein. In der gezeigten Ausführungsform sind vier Handhabungsgeräte (21,22,23,24) vorhanden, die sich in zwei Roboterpaare unterteilen, wobei innerhalb der Paare die Roboter (21,22 und 23,24) kooperieren. Die Handhabungsgeräte (21,22,23,24) können ansonsten auch anders ausgebildet sein.

Die Bewegungen der Handhabungsgeräte (21,22,23,24) können auf die Bewegungen des Laserstrahls (8) abgestimmt sein. Gemäß der Erfindung werden die Bewegungseinheit (15) und die Handhabungsgeräte (21,22,23,24) gemeinsam gesteuert. Dies kann durch eine übergeordnete Steuerung oder durch eine Robotersteuerung geschehen. In einer Robotersteuerung können die Bewegungsachsen I, II, III als Zusatzachsen geführt werden. Alternativ oder zusätzlich können auch die Bewegungsachsen einer Scanneroptik gemeinsam mit den Handhabungsgeräten (21,22,23,24) gesteuert werden.
Das Handhabungswerkzeug (25) kann in beliebig geeigneter Weise ausgebildet sein. Es umgibt in der geschlossenen Betriebsstellung das oder die Werkstücke (6,6',6") an mehreren Seiten und kann sie z.B. allseitig umschließen, wobei an ein oder mehreren Seiten ein oder mehrere Öffnungen oder andere Freiräume (44) für den Zutritt der Bearbeitungswerkzeuge (46) zu den innen liegenden Bearbeitungsstellen an dem oder den Werkstücken (6,6',6") vorhanden sind.

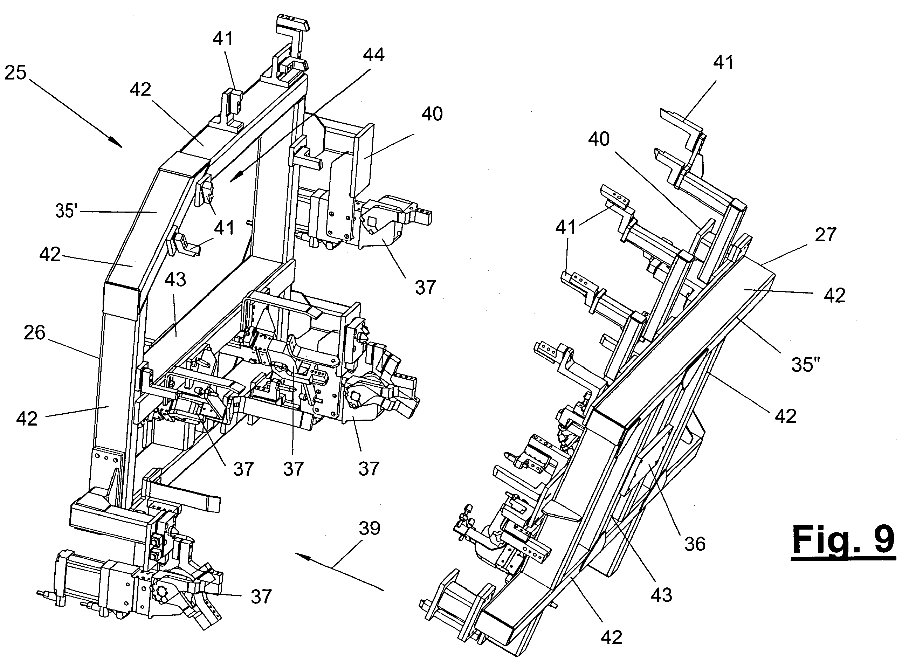

In Figur 9 bis 17 sind zwei Ausführungsbeispiele im Detail dargestellt, in denen das Handhabungswerkzeug (25) als Greifeinrichtung ausgebildet ist, die mit der Roboterhand der Roboter (21,22,23,24) über eine Wechselkupplung lösbar verbunden werden kann.

Das Handhabungswerkzeug (25) bzw. die Greifeinrichtung (25) kann ein rahmen-, gehäuse- oder kastenförmiges Gestell (35) mit mindestens einem Roboteranschluss (36) und mit mehreren Werkzeugelementen aufweisen, die z.B. als Greifelemente (37), z.B. Spanner, Sauger, Magnete oder dgl. ausgebildet sind. Die Greifelemente (37) können Antriebe besitzen und über die Robotersteuerung als Zusatzachsen steuerbar sein. Außerdem können ein oder mehrere andere Werkzeugelemente, z.B. Führungselemente (41) für das Werkstück (6) oder für Werkstückteile (6',6") am Gestell (35) angeordnet und z.B. als Bauteilauflagen, Zentrierstifte oder dgl. ausgebildet sein. Über den Roboteranschluss (36) und ggf. die Wechselkupplung können Betriebsmittel, z.B. Signal- und Leistungsströme, Druckluft, Kühlmittel, Hydraulikfluide etc. übertragen werden.

In der gezeigten Ausführungsform ist das Handhabungs- oder Greifwerkzeug (25) mehrteilig ausgebildet. Es kann geöffnet und geschlossen werden und weist mehrere, z.B. zwei Werkzeug- oder Greiferteile (26,27) auf, die von jeweils mindestens einem Handhabungsgerät (21,22,23,24) einzeln und eigenständig gehandhabt werden, wobei sie in eine Betriebsstellung aneinander angenähert und ggf. miteinander verbunden werden können. In der Betriebsstellung an der Arbeitsstelle (4) bilden sie das komplette und geschlossene Handhabungswerkzeug (25).

Die Werkzeug- oder Greiferteile (26,27) können von den Handhabungsgeräten (21,22,23,24) unter Beibehaltung der geschlossenen Betriebsstellung des Handhabungswerkzeugs (25) und eines eventuellen Werkzeugverbundesgemeinsam und synchronisiert im Raum bewegt werden. Die an unterschiedlichen Stellen positionierten Handhabungsgeräten (21,22,23,24) bewegen dabei jeweils ein Werkzeug- oder Greiferteil (26,27) und führen aufeinander abgestimmte Bewegungen aus.

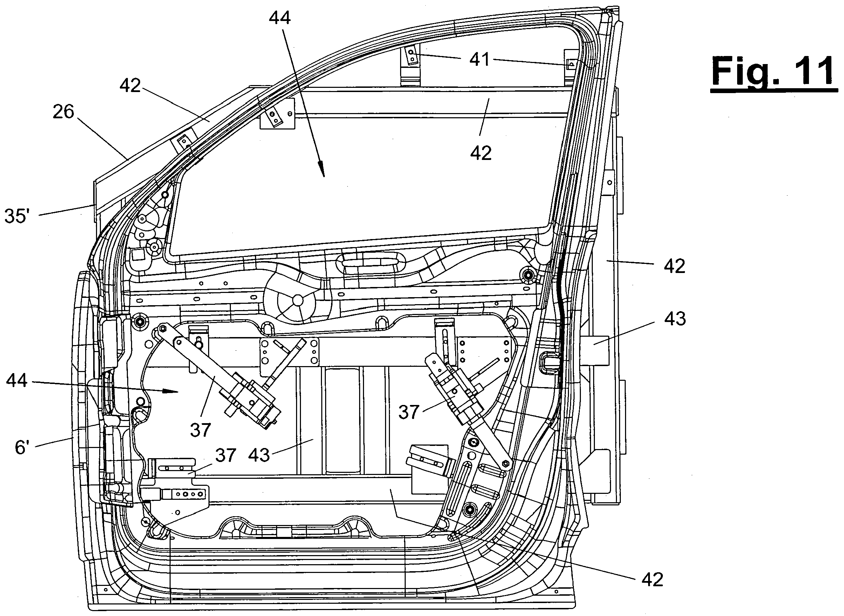

Die Werkzeug- oder Greiferteile (26,27) können an ein oder mehreren Stellen lösbar miteinander verbunden sein und hierüber exakt gegenseitig in zumindest einer Richtung bzw. Achse geführt und ggf. positioniert werden. Dies kann z.B. eine mechanische Verbindung mit einem Anschlag oder eine einfache formschlüssige Steckverbindung (38) sein, wobei z.B. das eine Werkzeug- oder Greiferteil (27) mindestens einen quer zur Trenn- oder Teilungsebene vorstehenden Stift oder Konusbolzen und das andere (26) mindestens eine dazu passende Aufnahmeöffnung aufweist, z.B. wie in Figur 11 dargestellt. Die Steckverbindung (38) kann temporär sein und durch abgestimmte Bewegungen der Handhabungsgeräte (21,22,23,24) betätigt werden. Sie wird durch ein Zusammenfahren der Werkzeug- oder Greiferteile (26,27) in Zustellrichtung (39) geschlossen sowie durch die abgestimmten Roboterbewegungen zusammen gehalten. Durch ein Auseinanderfahren wird sie wieder geöffnet.

Ansonsten können die Werkzeug- oder Greiferteile (26,27) noch weitere Werkzeugelemente, z.B. Stützelemente (40), z.B. Stützplatten, aufweisen, die sich quer zur Zustellrichtung (39) erstrecken und die Presskräfte der Handhabungsgeräte (21,22,23,24) beim Zusammenfahren und kraftgesteuerten Zusammenhalten der Werkzeug- oder Greiferteile (26,27) aufnehmen.

Alternativ können fernsteuerbare mechanische Verbindungseinrichtungen, z.B. Klemmen, Riegel oder dgl. an ein oder mehreren Werkzeug- oder Greiferteilen (26,27) vorhanden sein. In einer weiteren Abwandlung kann auf eine führende und ggf. positionierende mechanische Verbindung verzichtet werden, wobei der Zusammenhalt der Werkzeug- oder Greiferteilen (26,27) und die Bildung des Handhabungs- oder Greifwerkzeugs (25) nur durch die aufeinander abgestimmten Bewegungen der Handhabungsgeräte (21,22,23,24) bewirkt wird.

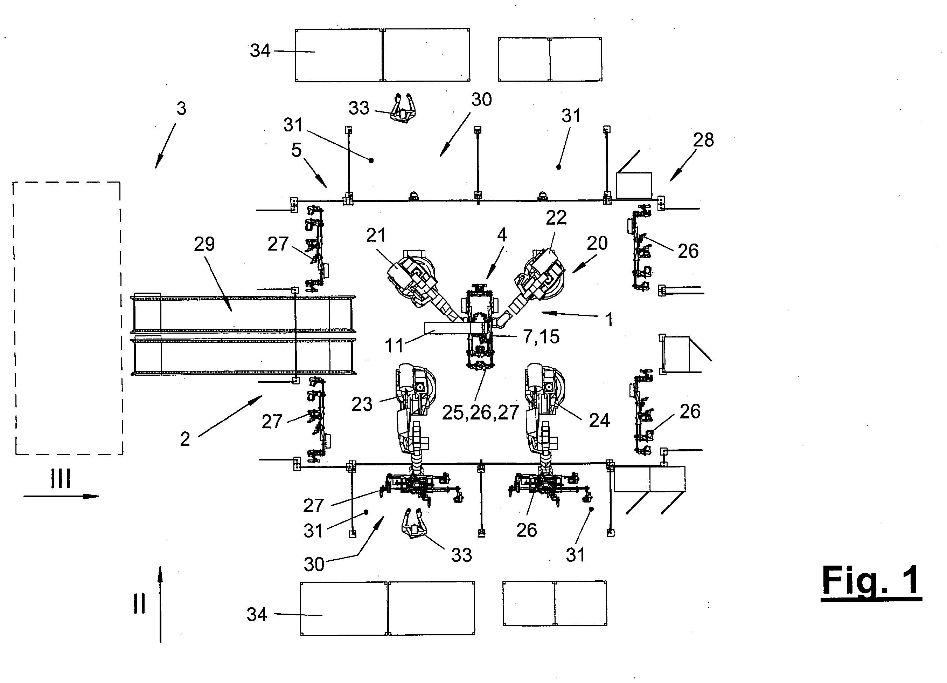

Innerhalb der jeweils beidseits der Arbeitsstelle (4) paarweise aufgestellten Roboter (21,22 und 23,24) führt jeder der Roboter ein Werkzeugteil (26,27) und ist mit diesem über die besagte Wechselkupplung an der Roboterhand lösbar verbunden. Nach dem Verbinden der Werkzeugteile (26,27) kann das komplette Handhabungswerkzeug (25) von den kooperierenden Robotern (21,22 und 23,24) jedes Paares in aufeinander abgestimmten Bewegungen gemeinsam, insbesondere an der Arbeitsstelle (4), gehalten und geführt werden. Die Handhabungseinrichtung (20) hält und führt das oder die Werkstücke (6) schwebend unter dem von oben einfallenden Laserstrahl (8). Durch die Paarbildung können die Bearbeitungs- und Rüstzeiten abwechselnd überschnitten werden, so dass die Laserquelle und die Laserbearbeitung maximal ausgenutzt ist und im wesentlichen unterbrechungsfrei arbeiten kann. Wie Figur 1 verdeutlicht, sind die Handhabungsgeräte (21,22) in der Laserbearbeitung beschäftigt, während die anderen Handhabungsgeräte (23,24) einen Werkstückwechsel durchführen.

Die Handhabungsgeräte (21,22,23,24) führen mit dem Handhabungswerkzeug (25) bzw. dessen Werkzeugteilen (26,27) in der geöffneten Werkzeugstellung auch die Be- und Entladevorgänge des oder der Werkstücke (6,6',6") durch. Die Werkzeugteile oder Greiferteile (26,27) können jeweils mindestens ein Werkstückteil (6',6") aufnehmen und greifen. Alternativ kann ein Werkstück (6) mit einem der Greiferteile (26,27) aufgenommen werden, wobei das andere Greiferteil (27,26) vorerst leer bleibt. Nach dem Zusammenfügen der Werkzeugteile oder Greiferteile (26,27) wird ein kastenförmiges Handhabungs- oder Greifwerkzeug (25) gebildet, welches das oder die Werkstücke (6) oder Werkstückteile (6',6") an mehreren Seiten umschließt und in einer definierten Position festhält. Hierdurch können auch Werkstückteile (6',6") in einer vorbestimmten Position gespannt werden und durch die anschließende Laserbearbeitung gefügt oder in anderer Weise bearbeitet werden.

Nach der Bearbeitung kann das Handhabungswerkzeug (25) von den Handhabungsgeräten (21,22,23,24) wieder geöffnet werden, wobei das Werkstück (6) mit einem Werkzeugteil (26,27) verbunden und gespannt bleibt und das andere Werkzeugteil (27,26) entfernt wird. Das Werkstück (6) kann dann an einer Ablage oder einer Werkstückabführung abgegeben und abtransportiert werden. Die leeren Werkzeugteile (27,26) können anschließend wieder beladen werden.

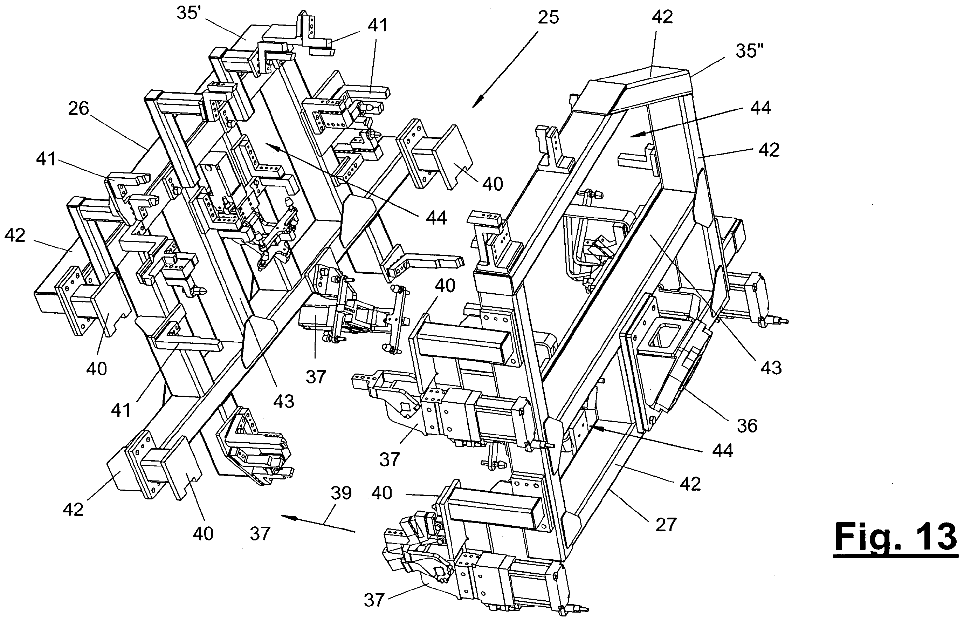

Figur 9 und 13 zeigen in zwei Varianten ein Handhabungswerkzeug (25), welches jeweils aus zwei Werkzeug- oder Greiferteilen (26,27) besteht. In Figur 10 bis 12 und Figur 14 bis 17 sind die Handhabungswerkzeuge (25) sowie deren Teile mit jeweils zwei Werkstückteilen (6',6") dargestellt.

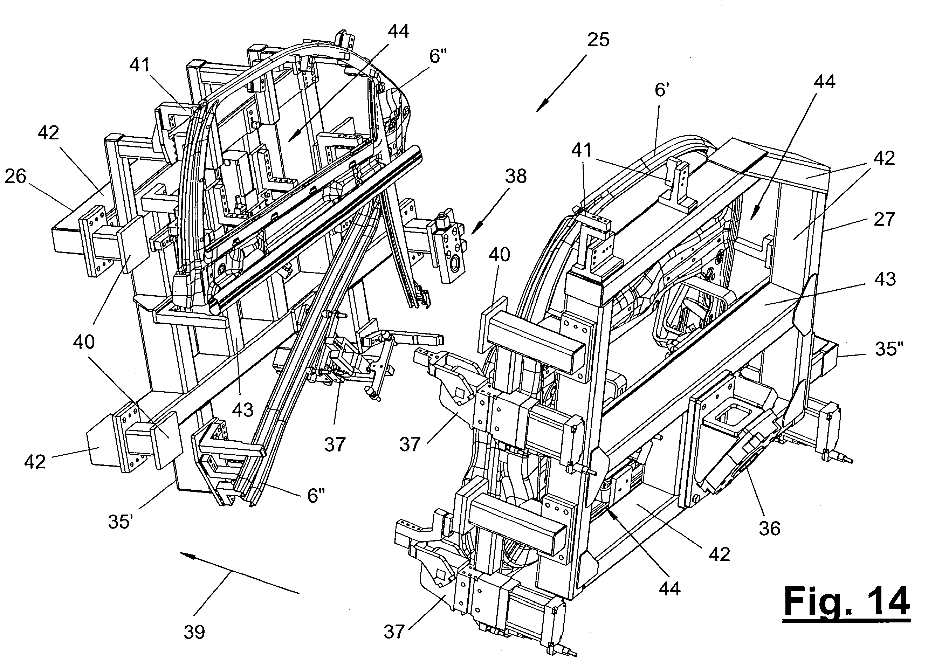

In beiden Varianten sind die Werkzeug- oder Greiferteile (26,27) mit rahmenartigen Gestellteilen (35',35") und jeweils einem Roboteranschluss (36) ausgerüstet. Die Gestellteile (35',35") sind starr, formstabil und dabei leichtgewichtig ausgebildet. Sie können mit den Greif-, Stütz- und Führungselementen (37,40,41)die Geometrie des oder der Werkstücke (6,6',6") bestimmen und diese ggf. in die Sollform bringen. Die Gestellteile (35',35") können eine bereichsweise durchbrochene Plattenstruktur oder eine Gitterstruktur haben und z.B. aus mehreren miteinander verbundenen verformungssteifen balken- oder rohrförmigen Trägern (42,43) aus einem geeigneten Werkstoff, z.B. Stahl, Leichtmetall oder dgl., bestehen, die zwischen sich ein oder mehrere Öffnungen oder Freiräume (44) für den Werkzeugdurchgriff aufweisen. Die außen liegenden Träger (42) können einen umlaufenden geschlossenen Außenrahmen bilden, wie er z.B. in Figur 14 dargestellt ist. Die innen liegenden Träger (43) können Streben oder Versteifungen bilden. Die Träger (42,43) können in einer gemeinsamen Ebene liegen und einen im wesentlichen ebenen Tragrahmen oder ein ebenes Gestellteil (35',35") bilden.

Die Gestellteile (35',35") bilden bei einer Annäherung und einer evtl. Verbindung der Werkzeug- oder Greiferteile (26,27) miteinander das Gestell (35) des Handhabungswerkzeugs (25). Die vorerwähnten Anschläge, Steckverbindungen (38), Verbindungseinrichtungen und Stützelemente (40) wirken zwischen den Gestellteilen (35',35").

Die besagten und ggf. mit Sockeln oder Auslegern versehenen Greifelemente (37), Führungselemente (41) und Stützelemente (40) sind an den Front- oder Seitenbereichen der Gestellteile (35',35") bzw. Träger (42,43) angeordnet und weisen im wesentlichen in die gleiche Richtung quer zur Gestellebene nach vorn. Bei geschlossenem Handhabungs- oder Greifwerkzeug (25) sind diese Elemente (37,40,41) der Werkzeug- oder Greiferteile (26,27) einander zugekehrt, wobei die an der Gestellrückseite angeordneten Roboteranschlüsse (36) nach außen weisen. Zwischen den Elementen (37,49,41) bestehen seitliche Abstände, wodurch Freiräume (44) für den seitlichen Werkzeugdurchtritt geschaffen werden. Durch die Formgebung und Elementanordnung bilden die Werkzeug- oder Greiferteile (26,27) schalenförmige Aufnahmen für jeweils ein Werkstückteil (6',6"), das seinerseits ein- oder mehrteilig sein kann.

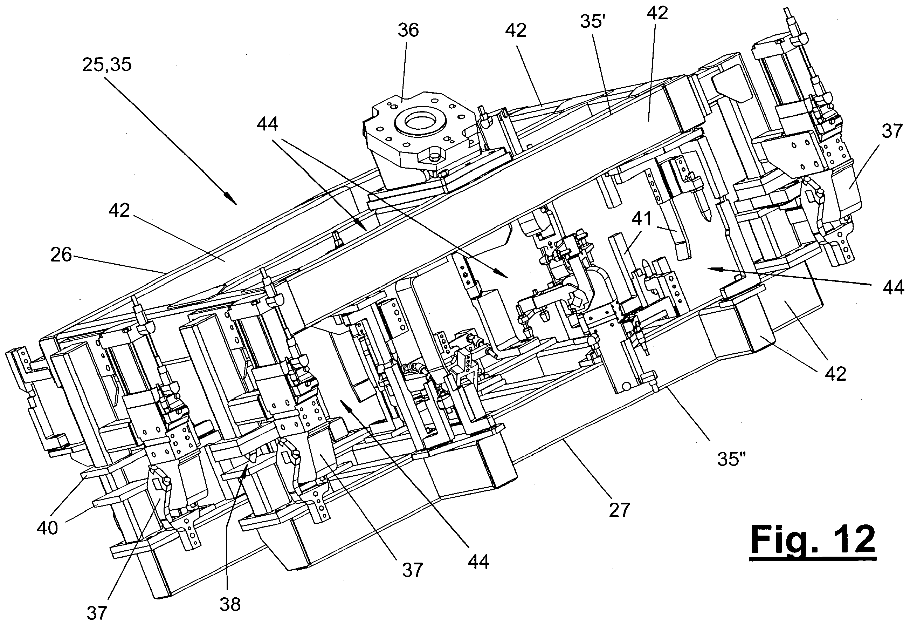

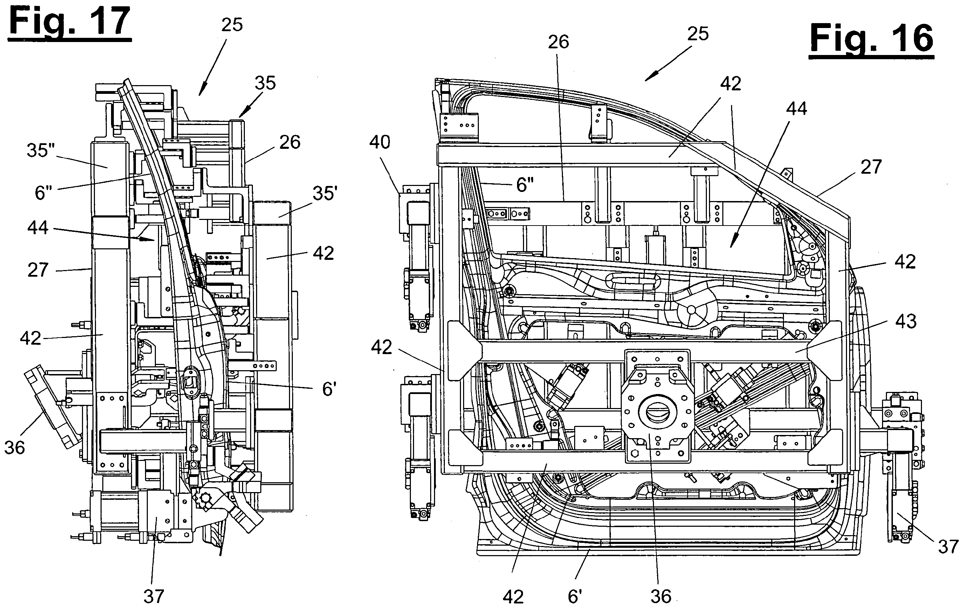

Die Greifelemente (37) und die Führungselemente (41) können nicht nur mit dem eigenen oder zugeordneten Werkstückteil (6',6") zusammenwirken, sondern auch mit dem anderen Werkstückteil (6",6'), das vom jeweils anderen Werkzeug- oder Greiferteil (26,27) gehalten wird. Figur 12 und 16, 17 zeigen das von den zusammengefahrenen Werkzeug- oder Greiferteilen (26,27) gebildete kastenförmige Handhabungswerkzeug (25). Aus Figur 17 ist hierzu ersichtlich, wie die Greifelemente (37) und Führungselemente (41) mit den Werkstückteilen (6',6") und gegenseitig zusammenwirken, um die Werkstückteile (6',6") exakt zu positionieren und zu spannen. Durch das an ein oder mehreren Seiten offene kasten- oder gehäuseförmige Handhabungswerkzeug (25) sind die Bearbeitungsstellen an den Werkstückteilen (6',6") für den Laserstrahl (8) von außen zugänglich.

Das teilbare Handhabungswerkzeug (25) ermöglicht auch, insbesondere in Öffnungsstellung, ein Assemblieren der Werkstücke (6) oder Werkstückteile (6',6") aus verschiedenen Einzelkomponenten. Dies kann an ein oder mehreren Werkzeug- oder Greiferteilen (26,27) geschehen, die hierfür mit geeigneten Greif- und Führungselementen (37,41) ausgerüstet sind. Es kann ferner spezielle Greif- und Führungselemente (37,41) geben, welche das assemblierte Werkstück oder Werkstückteil (6',6") oder ggf. auch das später gefügte Werkstück (6) spannen, führen und halten.

Aus Figur 10 ist ein mehrteiliges Werkstück (6) ersichtlich, welches z.B. als Fahrzeugtüre ausgebildet ist und aus einem ersten Werkstückteil (6') in Form eines äußeren Türrahmens und einem zweiten Werkstückteil (6") in Gestalt eines Türinnenrahmens besteht. Es kann darüber hinaus noch weitere Werkstückteile aufweisen. In Figur 11 ist das am Werkzeug- und Greiferteil (26) befindliche Werkstückteil (6') in der Draufsicht dargestellt.

In der Variante von Figur 13 bis 17 besteht das am Werkzeug- oder Greiferteil (26) gehaltene Werkstückteil (6") aus einem Fensterrahmen und einem schräg angeordneten Aufprallträger, die assembliert und dann mit dem als Innenblech einer Türe gestalteten Werkstückteil (6') am anderen Werkzeug- oder Greiferteil (27) gefügt werden sollen. Aus den Darstellungen ist ersichtlich, dass manche Führungselemente (41) eine Doppelfunktion haben und beide Werkstückteile (6',6") führen können.

In diesem wie im anderen Ausführungsbeispiel sind die Greifelemente (37) und die Führungselemente (41) derart ausgebildet und angeordnet, dass die Werkstückteile (6',6") von einer Seite aufgelegt und aufgenommen werden können und dass nach dem Fügeprozess das Handhabungswerkzeug (25) durch Entfernen eines Werkzeug- oder Greiferteils (26,27) geöffnet werden kann, wobei das gefügte Werkstück (6) am anderen Werkzeug- oder Greiferteil (27,26) verbleibt und von diesem an geeigneter Stelle abgegeben werden kann. Aus den Zeichnungen ist außerdem ersichtlich, dass die rahmenartigen Gestellteile (35',35") aus mehreren untereinander verbundenen Armen oder Streben bestehen können, die zwischen sich Zugangsöffnungen für die Werkstückteile (6',6") freilassen. Das Handhabungswerkzeug (25) und seine Teile (26,27) können dadurch ein niedriges und handhabungsfreundliches Gewicht haben.

Bei der Laserbearbeitung können z.B. Werkstückteile (6',6") durch ein oder mehrere Schweißnähte oder Schweißpunkte miteinander verbunden werden. Über die Bewegungseinheit (15) und/oder eine Scanneroptik kann dabei der Laserstrahl (8) seitlich ausgelenkt werden. Hierdurch können z.B. durchgehende oder unterbrochene Schweißnähte gebildet werden, wobei der Laserstrahl (8) durch die Auslenkung entlang der vorgegebenen Schweißbahn bewegt wird und ggf. mit unterschiedlichen Einfallwinkeln am Werkstück (6) auftrifft. Während dieses Bearbeitungsvorgangs kann die Handhabungseinrichtung (20) das oder die Werkstücke (6) in Ruhe halten oder diese gleichzeitig bewegen, wobei es z.B. durch Bewegungsüberlagerung zu einer Erhöhung der Schweißgeschwindigkeit kommen kann. Außerdem können das oder die Werkstücke (6) über die Handhabungseinrichtung (20) bei Bedarf umorientiert werden. Der besagte Einfallwinkel kann durch die abgestimmten Bewegungen bei Bedarf gesteuert und z.B. konstant in senkrechter Lage zur gerade bearbeiteten Werkstückoberfläche gehalten werden.

Durch die steuerbare Auslenkung des Laserstrahls (8) können beliebige Nahtgeometrien gebildet werden. Dies können z.B. unterbrochene Steppnähte mit geschwungenen und z.B. C-förmigen Nahtabschnitten sein. Über die Strahlauslenkung können ferner Pendelnähte oder andere Arten von Schweißnähten gebildet werden.

Etwaige Abstandsänderungen zwischen der Austrittstelle des Laserstrahls (8) am Laserkopf (7) und dem oder den Werkstücken (6) können durch die eingangs erwähnte Brennweitenverstellung des Laserkopfes (7) kompensiert werden. Alternativ oder zusätzlich ist auch eine Nachführbewegung des oder der Werkstücke durch die Handhabungseinrichtung (20) möglich. Ferner kann die Bewegungseinheit (15) ein entsprechende Fahrachse haben. Eine Änderung des Arbeitsabstands kann auch zu anderen Prozesszwecken, z.B. zur bewussten Vergrößerung oder Verkleinerung des Brennflecks des Laserstrahls (8) auf dem oder den Werkstücken (6) eingesetzt werden.

Bei anderen Laserbearbeitungsprozesses, z.B. beim Löten oder Schweißen mit Zusatzdraht oder dgl. können von der Handhabungseinrichtung (20) oder von anderer Stelle Zusatzmittel, wie Schweißdraht oder dgl. zugeführt werden. Auch eine Schutzgaszufuhr ist über eine entsprechende Gestaltung der Handhabungseinrichtung (20) oder dgl. möglich.

In ähnlicher Weise können auch andere Laserbearbeitungsprozesse, wie z.B. Laserschneiden oder Laserkleben durchgeführt werden. Ferner kann mit dem Laserstrahl (8) eine gezielte Erwärmung von Werkstückbereichen zum Aushärten von Dichtmaterialien, Klebstoffen oder dgl. durchgeführt werden.

Ein oder mehrere Handhabungsgeräte (21,22,23,24) können mit ihren Werkzeug- oder Greiferteilen (26,27) auch Vorbearbeitungen an den aufgenommenen Werkstückteilen (6',6") durchführen. Hierfür können z.B. mit dem Laserstrahl (8), der ggf. in der Leistung reduziert wird, kleine Beulen an den Werkstückteilen (6',6"), z.B. im Bereich der später eingebrachten C-förmigen Nahtabschnitte gesetzt werden. Hierbei werden einzelne Punkte am Werkstückteil (6',6") durch den Laserstrahl (8) einseitig und kurzzeitig erwärmt, wodurch die besagten Beulen ausgewölbt werden und Abstandshalter für Entgasungsspalte bilden.

Alternativ oder zusätzlich können im Bereich rund um die Arbeitsstelle (4) ein oder mehrere stationäre Bearbeitungsvorrichtungen (nicht dargestellt) vorhanden sein, an denen Zusatzprozesse an ein oder mehreren von der Handhabungseinrichtung (20) zugeführten Werkstücken (6) oder Werkstückteilen (6',6") durchgeführt werden.

Ein oder mehrere Laserbearbeitungsvorrichtungen (1) sind Bestandteil einer Bearbeitungsstation (2). Die Laserbearbeitungsvorrichtung(en) (1) oder die Bearbeitungsstation (2) weist ein oder mehrere Werkstückzuführungen (29,30) auf, über die Werkstücke (6) oder Werkstückteile (6',6") zugeführt und/oder abgeführt werden können. Die Werkstückzuführung (29) ist z.B. als ein Paar von mechanischen Zuführ- und Abführförderern ausgebildet, die als Kettenförderer, Bandförderer oder in sonstiger beliebiger Weise ausgebildet sein können.

Ein oder mehrere Werkstückzuführungen (30) können für eine manuelle Zufuhr durch einen Werker (33) ausgebildet sein. Hierfür können im Bewegungs- und Arbeitsbereich der Handhabungsgeräte (21,22,23,24) ein oder mehrere Kabinen (31) mit frontseitigen Barrieren (32) vorhanden sein, an deren Außenseite der Werker (33) steht, wobei er die von einer Bereitstellung (34), z.B. von Transportwagen oder dgl., zugeführten Werkstücke (6) oder Werkstückteile (6',6") entnimmt und in eine von einem Handhabungsgerät (21,22,23,24) bereitgehaltene Greifeinrichtung (25) oder ein Greiferteil (26,27) einlegt. Figur 3 zeigt dies z.B. in der rechten Bildhälfte. Der Roboter (23) hält das Greiferteil (27) in die Kabine (31) im Bereich vor der Barriere (32).

Die Kabinen (31) können Bestandteil einer Sicherungseinrichtung (5) der Laserbearbeitungsvorrichtung (1) oder der Bearbeitungsstation (2) sein. Die Sicherungseinrichtung (5) dient dem Schutz der Werker (33) und anderer Personen und verhindert den Personenzutritt in den Stationsbereich und den Arbeitsbereich der automatischen Laserbearbeitungseinrichtung (1). Die Sicherungseinrichtung (5) kann z.B. einen umlaufenden Zaun, Schutzwände oder dgl. und die erwähnten Barrieren (32) aufweisen. Durch die Begrenzung des Arbeitsbereichs (9) des Laserstrahls (8) braucht die Sicherungseinrichtung (5) allerdings keinen erhöhten Sicherheitsanforderungen an die Laserstrahlsicherheit zu genügen und braucht auch keinen Auftreffschutz für den Laserstrahl (8) zu bieten.

Die Laserbearbeitungsvorrichtung (1) oder die Bearbeitungsstation (2) kann ferner ein oder mehrere Magazine (28) aufweisen, die unterschiedlichen Zwecken dienen können. Einerseits können sie einer Bevorratung unterschiedlicher Handhabungswerkzeuge (25) oder Werkzeugteile (26,27) dienen, wie dies in den Ausführungsbeispielen dargestellt ist. Die Werkzeug- oder Greiferteile (26,27) sind an unterschiedliche Werkstücke oder Werkstückteile (6) angepasst und werden in geeigneten Magazinständern im Arbeitsbereich der Roboter (21,22,23,24) aufgenommen. Sie können zugleich einen Teil der Umzäunung und der Sicherungseinrichtung (5) bilden. Wie Figur (1) verdeutlicht, kann die Bearbeitungsstation (2) Bestandteil einer größeren Bearbeitungsanlage (3) sein, die daneben weitere Stationen aufweist, die in Figur 1 gestrichelt angedeutet sind. Die Bearbeitungsstationen (2) können hierbei Zellen bilden, die miteinander verkettet sind.

Abwandlungen der gezeigten und beschriebenen Ausführungsformen sind in verschiedener Weise möglich. Zum einen können die Trageinrichtung (11), die Bewegungseinheit (15) und die Handhabungseinrichtung (20) anders ausgebildet sein. Auf die Bewegungseinheit (15) kann bei Bedarf verzichtet werden, wobei der Laserkopf (7) starr an der Trageinrichtung (11) befestigt wird und der Laserstrahl (8) über eine Scanneroptik nach ein oder mehreren Achsen ausgelenkt wird. Ferner ist es möglich, mehrere Laserköpfe (7) an ein oder mehreren zugeordneten oder gemeinsamen Trageinrichtungen (11) anzuordnen und das oder die Werkstücke (6) mit mehreren Laserstrahlen (8) gleichzeitig und ggf. aus verschiedenen Richtungen zu bearbeiten. Ferner können ein oder mehrere Laserköpfe (7) in anderer Weise ausgerichtet und angeordnet sein und einen Laserstrahl (8) mit schräger oder horizontaler Ausrichtung emittieren. Die Begrenzung des Arbeitsbereichs (9) und der strahlsichere Bereich (10) kann in diesem Fall durch eine vertikale oder schräge Seitenwand aus Beton oder dgl. gebildet werden.

Die erfindungsgemäße Begrenzung des Arbeitsbereichs (9) kann außerdem in Verbindung mit beliebigen anderen und auch konventionellen und z.B. robotergeführten Laserbearbeitungseinrichtungen eingesetzt werden. Desgleichen kann die Kooperation von ein oder mehreren Handhabungsgeräten (21,22,23,24) mit einem in mehrere Werkzeugteile (26,27) unterteilten Handhabungswerkzeug (25) für sich allein und bei Bedarf ggf. in Verbindung mit anderen Geräte- und Stationskonfigurationen benutzt werden. Diese Handhabungstechnik ist außerdem für beliebige andere Bearbeitungsprozesse, z.B. das Punktschweißen, Kleben, Schrauben, Nieten, mechanisches Umformen oder dgl. geeignet.

Ferner können alternativ oder zusätzlich zur Laserschweißeinrichtung andere Bearbeitungsgeräte, Bearbeitungswerkzeuge und Handhabungseinrichtungen vorhanden sein. Dies können z.B. stationäre Schweißzangen, Falzeinrichtungen oder dgl. sein. Das Handhabungswerkzeug (25) kann einteilig sein. Es kann auch mehr als zwei Werkzeugteile (26,27) haben. Ferner können die Werkzeugteile (26,27) an anderer Stelle beladen und verbunden werden und erst anschließend von einem Handhabungsgerät (21,22,23,24) aufgenommen werden. Das Handhabungswerkzeug (25) kann auch eine andere Ausbildung und Funktion als die gezeigte Ausführung einer Greifeinrichtung haben.

Die Erfindung betrifft außer den in den Ansprüchen genannten Merkmalkombinationen die vier folgenden eigenständigen Erfindungsaspekte, die ggf. auch mit den Merkmalen der Unteransprüche ergänzt werden können.

Die Laserbearbeitungseinrichtung (1) hat mindestens einen Laserkopf (7) und eine Trageinrichtung (11), wobei die Trageinrichtung (11) ein Gestell (12) mit einer daran angeordneten ein- oder mehrachsigen Bewegungseinheit (15) aufweist, an welcher der Laserkopf (7) angeordnet ist.

Die Laserbearbeitungseinrichtung (1) ist derart ausgebildet, angeordnet und ausgerichtet, dass der Arbeitsbereich (9) des Laserstrahls (8) allseitig begrenzt ist, wobei der Laserstrahl (8) in seiner seitlichen Auslenkung eine Begrenzung hat und wobei an der Auftreffseite ein strahlsicherer Bereich (10) in der Umgebung den Arbeitsbereich (9) begrenzt.

Eine Handhabungseinrichtung (20) für ein oder mehrere Werkstücke weist mindestens zwei kooperierende Handhabungsgeräte (21,22,23,24) mit jeweils einer oder mehreren steuerbaren Bewegungsachsen und mit einem als mehrteilige Greifeinrichtung ausgebildeten Handhabungswerkzeug (25) auf, wobei die Handhabungsgeräte (21,22,23,24) jeweils ein Greiferteil (26,27) führen und dabei die Greiferteile (26,27) zu einer Greifeinrichtung (25) zusammensetzen und gemeinsam handhaben.

Eine Bearbeitungsstation (2) weist eine oder mehrere der gezeigten Laserbearbeitungseinrichtungen (1) auf.

### BEZUGSZEICHENLISTE

- 1: Laserbearbeitungseinrichtung
- 2: Bearbeitungsstation
- 3: Bearbeitungsanlage
- 4: Arbeitsstelle
- 5: Sicherungseinrichtung
- 6: Werkstück
- 6': Werkstückteil
- 6": Werkstückteil
- 7: Laserkopf
- 8: Laserstrahl
- 9: Arbeitsbereich
- 10: strahlsicherer Bereich, Boden
- 11: Trageinrichtung, Manipulator
- 12: Gestell
- 13: Säule
- 14: Ausleger
- 15: Bewegungseinheit
- 16: Manipulatorhand
- 17: Gehäuse
- 18: Schwenkkopf
- 19: Abtriebsflansch
- 20: Handhabungseinrichtung
- 21: Handhabungsgerät, Roboter
- 22: Handhabungsgerät, Roboter
- 23: Handhabungsgerät, Roboter
- 24: Handhabungsgerät, Roboter
- 25: Handhabungswerkzeug, Greifeinrichtung
- 26: Werkzeugteil, Greiferteil
- 27: Werkzeugteil, Greiferteil
- 28: Magazin
- 29: Werkstückzuführung, Förderer
- 30: Werkstückzuführung, Werker
- 31: Kabine
- 32: Barriere
- 33: Werker
- 34: Bereitstellung
- 35: Gestell
- 35': Gestellteil
- 35": Gestellteil
- 36: Roboteranschluss
- 37: Werkzeugelement, Greifelement
- 38: Steckverbindung
- 39: Zustellrichtung
- 40: Werkzeugelement, Stützelement
- 41: Werkzeugelement, Führungselement
- 42: Träger, Außenträger
- 43: Träger, Innenträger
- 44: Freiraum

- I: Bewegungsachse der Bewegungseinheit
- II: Bewegungsachse der Bewegungseinheit
- III: Bewegungsachse der Bewegungseinheit

- α: Auslenkwinkel des Laserstrahls

## Patentansprüche

1. Laserbearbeitungseinrichtung mit mindestens einem Laserkopf (7) und einer Trageinrichtung (11), welche ein starres und stationär angeordnetes Gestell (12) für den Laserkopf (7) aufweist, wobei die Laserbearbeitungseinrichtung (1) eine mehrachsig bewegliche Handhabungseinrichtung (20) für ein oder mehrere Werkstücke (6) aufweist, **dadurch gekennzeichnet, dass** am Gestell (12) eine ein- oder mehrachsige Bewegungseinheit (15) angeordnet ist, an welcher der Laserkopf (7) angeordnet ist, wobei die Bewegungseinheit (15) eine innerhalb ihrer potenziellen Bewegungsmöglichkeiten begrenzte Beweglichkeit aufweist, wobei die Bewegungseinheit (15) durch die Begrenzung ihre durch die eine oder mehreren Bewegungsachsen an sich vorhandenen Bewegungsmöglichkeiten nicht ausschöpft und wobei der Laserstrahl (8) einen begrenzten Arbeitsbereich (9) mit einer Kegelform oder konischer Streifenform hat und wobei die Handhabungseinrichtung (20) und die Bewegungseinheit (15) gemeinsam gesteuert sind.

2. Laserbearbeitungseinrichtung nach Anspruch 1, **dadurch gekennzeichnet, dass** der Laserkopf (7) mindestens einen energiereichen Laserstrahl (8) von mindestens 2 kW emittiert und als Remote-Laser ausgebildet ist.

3. Laserbearbeitungseinrichtung nach Anspruch 1 oder 2, **dadurch gekennzeichnet, dass** der Laserkopf (7) eine verstellbare Brennweite aufweist.

4. Laserbearbeitungseinrichtung nach Anspruch 1, 2 oder 3, **dadurch gekennzeichnet, dass** das Gestell (12) eine Säule (13) und mindestens einen abstehenden Ausleger (14) aufweist, wobei die Bewegungseinheit (15) hängend am Ausleger (14) angeordnet ist.

5. Laserbearbeitungseinrichtung nach einem der vorhergehenden Ansprüche, **dadurch gekennzeichnet, dass** die Bewegungseinheit (15) eine bis drei steuerbare und angetriebene rotatorische Bewegungsachsen I, II, III aufweist und vorzugsweise als mehrachsige Manipulatorhand (16) ausgebildet ist.

6. Laserbearbeitungseinrichtung nach einem der vorhergehenden Ansprüche, **dadurch gekennzeichnet, dass** die Laserbearbeitungseinrichtung (1) derart ausgebildet, angeordnet und ausgerichtet ist, dass der Arbeitsbereich (9) des Laserstrahls (8) allseitig begrenzt ist, wobei der Laserstrahl (8) in seiner seitlichen Auslenkung eine Begrenzung hat und wobei an der Auftreffseite ein strahlsicherer Bereich (10) in der Umgebung den Arbeitsbereich (9) begrenzt.

7. Laserbearbeitungseinrichtung nach einem der vorhergehenden Ansprüche, **dadurch gekennzeichnet, dass** der Arbeitsbereich (9) des Laserstrahls (8) nach unten gegen den Boden gerichtet ist, wobei der strahlsichere Bereich (10) ein massiver Boden aus Beton ist.

8. Laserbearbeitungseinrichtung nach einem der vorhergehenden Ansprüche, **dadurch gekennzeichnet, dass** der räumliche Winkel des Arbeitsbereichs (9) auf bis zu 45° begrenzt ist.

9. Laserbearbeitungseinrichtung nach einem der vorhergehenden Ansprüche, **dadurch gekennzeichnet, dass** der Auslenkwinkel α der Schwenkachse II der Bewegungseinheit (15) auf gleich oder weniger weniger als ± 10°, vorzugsweise auf gleich oder weniger weniger als ± 5°, jeweils bezogen auf die Nulllage begrenzt ist.

10. Laserbearbeitungseinrichtung nach einem der vorhergehenden Ansprüche, **dadurch gekennzeichnet, dass** die Handhabungseinrichtung (20) mindestens ein Handhabungsgerät (21,22,23,24) mit mehreren steuerbaren Bewegungsachsen und mit einem Handhabungswerkzeug (25) aufweist.

11. Laserbearbeitungseinrichtung nach einem der vorhergehenden Ansprüche, **dadurch gekennzeichnet, dass** das Handhabungswerkzeug (25) kasten-, rahmen- oder gehäuseförmig ausgebildet ist und ein oder mehrere Werkstücke oder Werkstückteile (6,6',6") an mehreren Seiten umgibt und an ein oder mehreren Seiten Öffnungen oder Freiräume (44) aufweist.

12. Laserbearbeitungseinrichtung nach einem der vorhergehenden Ansprüche, **dadurch gekennzeichnet, dass** das Handhabungswerkzeug (25) mehrere Werkzeugteile (26,27), insbesondere Greiferteile, aufweist, wobei die Handhabungseinrichtung (20) mindestens zwei kooperierende Handhabungsgeräte (21,22,23,24) mit jeweils einem Greiferteil (26,27) aufweist, wobei die Handhabungsgeräte (21,22,23,24) die Greiferteile (26,27) zu einer Greifeinrichtung (25) zusammensetzen und gemeinsam handhaben.

13. Laserbearbeitungseinrichtung nach einem der vorhergehenden Ansprüche, **dadurch gekennzeichnet, dass** die Werkzeugteile (26,27) jeweils ein oder mehrere Greifelemente (37), Stützelemente (40) und Führungselemente (41) aufweisen.

14. Laserbearbeitungseinrichtung nach einem der vorhergehenden Ansprüche, **dadurch gekennzeichnet, dass** ein oder mehrere Greif-, Stütz- oder Führungselemente (37,40,41) des einen Werkzeugteils (26,27) auf Werkstücke oder Werkstückteile (6,6',6") am anderen Werkzeugteil (27,26) einwirken.

15. Verfahren zum Laserbearbeiten von ein oder mehreren Werkstücken (6) mit einer Laserbearbeitungseinrichtung (1) mit mindestens einem einen Laserstrahl (9) emittierenden Laserkopf (7) und einer Trageinrichtung (11), welche ein starres und stationär angeordnetes Gestell (12) für den Laserkopf (7) aufweist, wobei die ein oder mehreren Werkstücke (6) von einer mehrachsig beweglichen Handhabungseinrichtung (20) geführt werden, **dadurch gekennzeichnet, dass** der Laserkopf (7) von einer ein- oder mehrachsigen, an dem Gestell (12) befindlichen Bewegungseinheit (15) mit einer innerhalb ihrer potenziellen Bewegungsmöglichkeiten begrenzten Kinematik geführt wird, wobei die Bewegungseinheit (15) durch die Begrenzung ihre durch die eine oder mehreren Bewegungsachsen an sich vorhandenen Bewegungsmöglichkeiten nicht ausschöpft und der Laserstrahl (8) einen begrenzten Arbeitsbereich (9) mit einer Kegelform oder konischer Streifenform hat, wobei die Bewegungen der Handhabungseinrichtung (20) und der Bewegungseinheit (15) aufeinander abgestimmt und gemeinsam gesteuert werden.

## Claims

1. Laser machining device comprising at least one laser head (7) and a supporting device (11), which has a frame (12) arranged in a rigid and stationary manner for the laser head (7), the laser machining device (1) having a multi-axially movable handling device (20) for one or more workpieces (6), **characterized in that** a single-axis or multi-axis movement unit (15), on which the laser head (7) is arranged, is arranged on the frame (12), wherein the movement unit (15) has a limited mobility within its potential possible movement options, wherein, as a result of the limitation, the movement unit (15) does not exhaust its possible movement options intrinsically present as a result of the one or more movement axes, and wherein the laser beam (8) has a limited working range (9) having a conical shape or a conical strip shape, and wherein the handling device (20) and the movement unit (15) are controlled jointly.

2. Laser machining device according to Claim 1, **characterized in that** the laser head (7) emits at least one high-energy laser beam (8) of at least 2 kW and is constructed as a remote laser.

3. Laser machining device according to Claim 1 or 2, **characterized in that** the laser head (7) has an adjustable focal length.

4. Laser machining device according to Claim 1, 2 or 3, **characterized in that** the frame (12) has a pillar (13) and at least one projecting boom (14), the movement unit (15) being arranged in a suspended manner on the boom (14).

5. Laser machining device according to one of the preceding claims, **characterized in that** the movement unit (15) has one to three controllable and driven rotary movement axes I, II, III and is preferably constructed as a multi-axis manipulator hand (16).

6. Laser machining device according to one of the preceding claims, **characterized in that** the laser machining device (1) is constructed, arranged and aligned in such a way that the working range (9) of the laser beam (8) is limited on all sides, the laser beam (8) having a limitation in its lateral deflection, and wherein a radiation-safe region (10) in the surroundings limits the working range (9) on the impingement side.

7. Laser machining device according to one of the preceding claims, **characterized in that** the working range (9) of the laser beam (8) is directed downwards towards the floor, the radiation-safe region (10) being a massive concrete floor.

8. Laser machining device according to one of the preceding claims, **characterized in that** the spatial angle of the working range (9) is limited to up to 45°.

9. Laser machining device according to one of the preceding claims, **characterized in that** the deflection angle α of the pivot axis II of the movement unit (15) is limited to equal to or less than ± 10°, preferably to equal to or less than ± 5°, in each case with reference to the zero position.

10. Laser machining device according to one of the preceding claims, **characterized in that** the handling device (20) has at least one handling appliance (21, 22, 23, 24) having multiple controllable movement axes and having a handling tool (25).

11. Laser machining device according to one of the preceding claims, **characterized in that** the handling tool (25) is formed in the shape of a box, frame or housing and surrounds one or more workpieces or workpiece parts (6, 6', 6") on multiple sides, and has openings or open spaces (44) on one or more sides.

12. Laser machining device according to one of the preceding claims, **characterized in that** the handling tool (25) has multiple tool parts (26, 27), in particular gripper parts, wherein the handling device (20) has at least two cooperating handling appliances (21, 22, 23, 24) each having a gripper part (26, 27), wherein the handling appliances (21, 22, 23, 24) assemble the gripper parts (26, 27) to form a gripping device (25) and handle them jointly.

13. Laser machining device according to one of the preceding claims, **characterized in that** the tool parts (26, 27) each have one or more gripping elements (37), supporting elements (40) and guiding elements (41).

14. Laser machining device according to one of the preceding claims, **characterized in that** one or more gripping, supporting or guiding elements (37, 40, 41) of the one tool part (26, 27) act on workpieces or workpiece parts (6, 6', 6") on the other tool part (27, 26).

15. Method for laser machining of one or more workpieces (6) by using a laser machining device (1) comprising at least one laser head (7) emitting a laser beam (9) and a supporting device (11) which has a frame (12) arranged in a rigid and stationary manner for the laser head (7), the one or more workpieces (6) being guided by a multi-axially movable handling device (20), **characterized in that** the laser head (7) is guided by a single-axis or multi-axis movement unit (15) located on the frame (12) and having limited kinematics within its potential movement options, wherein, as a result of the limitation, the movement unit (15) does not exhaust its possible movement options intrinsically present as a result of the one or more movement axes, and the laser beam (8) has a limited working range (9) having a conical shape or a conical strip shape, and wherein the handling device (20) and the movement unit (15) are coordinated with one another and controlled jointly.

## Revendications

1. Dispositif d'usinage au laser comprenant au moins une tête de laser (7) et un dispositif porteur (11), lequel possède un bâti (12) rigide et monté en position fixe pour la tête de laser (7), le dispositif d'usinage au laser (1) possédant un dispositif de manipulation (20) mobile sur plusieurs axes pour une ou plusieurs pièces (6), **caractérisé en ce que** sur le bâti (12) est disposée une unité de mouvement (15) à un ou plusieurs axes sur laquelle est montée la tête de laser (7), l'unité de mouvement (15) présentant une mobilité limitée à l'intérieur de ses possibilités de mouvement potentielles, l'unité de mouvement (15) n'épuisant pas, de par la limitation, ses possibilités de mouvement présentes en elles-mêmes du fait de l'un ou des plusieurs axes de mouvement et le rayon laser (8) possédant une zone de travail (9) limitée avec une forme conique ou une forme de bande conique et le dispositif de manipulation (20) et l'unité de mouvement (15) étant commandés ensemble.

2. Dispositif d'usinage au laser selon la revendication 1, **caractérisé en ce que** la tête de laser (7) émet au moins un rayon laser (8) riche en énergie d'au moins 2 kW et elle est réalisée sous la forme d'un laser à distance.

3. Dispositif d'usinage au laser selon la revendication 1 ou 2, **caractérisé en ce que** la tête de laser (7) présente une distance focale réglable.

4. Dispositif d'usinage au laser selon la revendication 1, 2 ou 3, **caractérisé en ce que** le bâti (12) possède une colonne (13) et au moins un avant-bras (14) saillant, l'unité de mouvement (15) étant montée suspendue à l'avant-bras (14).

5. Dispositif d'usinage au laser selon l'une des revendications précédentes, **caractérisé en ce que** l'unité de mouvement (15) possède un à trois axes de mouvement rotatifs I, II, III commandables et entraînés et elle est de préférence réalisée sous la forme d'une main de manipulation (16) à plusieurs axes.

6. Dispositif d'usinage au laser selon l'une des revendications précédentes, **caractérisé en ce que** le dispositif d'usinage au laser (1) est configuré, disposé et orienté de telle sorte que la zone de travail (9) du rayon laser (8) est délimitée de tous les côtés, le rayon laser (8) ayant une limitation dans sa déviation latérale et une zone résistante au rayon (10) délimitant la zone de travail (9) dans l'environnement au niveau du point d'impact.

7. Dispositif d'usinage au laser selon l'une des revendications précédentes, **caractérisé en ce que** la zone de travail (9) du rayon laser (8) est orientée vers le bas contre le sol, la zone résistante au rayon (10) étant un sol massif en béton.

8. Dispositif d'usinage au laser selon l'une des revendications précédentes, **caractérisé en ce que** l'angle spatial de la zone de travail (9) est limité à un maximum de 45°.

9. Dispositif d'usinage au laser selon l'une des revendications précédentes, **caractérisé en ce que** l'angle de déviation α de l'axe de pivotement II de l'unité de mouvement (15) est limité à une valeur égale ou inférieure à ±10°, de préférence à une valeur égale ou inférieure à ±5°, respectivement en référence à la position zéro.

10. Dispositif d'usinage au laser selon l'une des revendications précédentes, **caractérisé en ce que** le dispositif de manipulation (20) possède au moins un appareil de manipulation (21, 22, 23, 24) comprenant plusieurs axes de mouvement commandables et comprenant un outil de manipulation (25).

11. Dispositif d'usinage au laser selon l'une des revendications précédentes, **caractérisé en ce que** l'outil de manipulation (25) est réalisé en forme de coffret, de cadre ou de boîtier et entoure une ou plusieurs pièces ou parties de pièce (6, 6', 6") sur plusieurs côtés et possède des ouvertures ou des espaces libres (44) sur un ou plusieurs côtés.

12. Dispositif d'usinage au laser selon l'une des revendications précédentes, **caractérisé en ce que** l'outil de manipulation (25) possède plusieurs parties d'outil (26, 27), notamment des parties de pince de préhension, le dispositif de manipulation (20) possédant au moins deux appareils de manipulation (21, 22, 23, 24) coopérant dotés respectivement d'une partie de pince de préhension (26, 27), les appareils de manipulation (21, 22, 23, 24) assemblant les parties de pince de préhension (26, 27) en un dispositif de préhension (25) et les manipulant en commun.

13. Dispositif d'usinage au laser selon l'une des revendications précédentes, **caractérisé en ce que** les parties d'outil (26, 27) possèdent respectivement un ou plusieurs éléments de préhension (37), éléments supports (40) et éléments de guidage (41).

14. Dispositif d'usinage au laser selon l'une des revendications précédentes, **caractérisé en ce qu'**un ou plusieurs éléments de préhension, supports et de guidage (37, 40, 41) d'une partie d'outil (26, 27) agissent sur des pièces ou des parties de pièce (6, 6', 6") sur l'autre partie d'outil (27, 26).

15. Procédé d'usinage au laser d'une ou plusieurs pièces (6), comprenant un dispositif d'usinage au laser (1) comprenant au moins une tête de laser (7) émettant un rayon laser (9) et un dispositif porteur (11), lequel possède un bâti (12) rigide et monté en position fixe pour la tête de laser (7), une ou plusieurs pièces (6) étant guidées par un dispositif de manipulation (20) mobile sur plusieurs axes, **caractérisé en ce que** la tête de laser (7) est guidée par une unité de mouvement (15) à un ou plusieurs axes qui se trouve sur le bâti (12), laquelle possède une cinématique limitée à l'intérieur de ses possibilités de mouvement potentielles, l'unité de mouvement (15) n'épuisant pas, de par la limitation, ses possibilités de mouvement présentes en elles-mêmes du fait de l'un ou des plusieurs axes de mouvement et le rayon laser (8) possédant une zone de travail (9) limitée avec une forme conique ou une forme de bande conique, les mouvements du dispositif de manipulation (20) et de l'unité de mouvement (15) étant accordés les uns sur les autres et commandés ensemble.
